# EUROPÄISCHE PATENTSCHRIFT

(11) **EP 3 030 044 B1**
(45) Veröffentlichungstag und Bekanntmachung des Hinweises auf die Patenterteilung: **12.06.2019**
(21) Anmeldenummer: 15196016.8
(22) Anmeldetag: 24.11.2015
(51) Int. Cl.: H05B 6/12

(54) **KOCHFELDVORRICHTUNG**
HOTPLATE DEVICE
PLAQUE DE CUISSON

(30) Priorität: 04.12.2014 ES 201431794
(43) Veröffentlichungstag der Anmeldung: 08.06.2016
(73) Patentinhaber: BSH Hausgeräte GmbH, 81739 München (DE)
(72) Erfinder: Acero Acero, Jesús, 50002 Zaragoza (ES); Aranda Vázquez, Sandra, 50018 Zaragoza (ES); Carretero Chamarro, Claudio, 50003 Zaragoza (ES); Díez Esteban, Cristina, 50017 Zaragoza (ES); Hernández Blasco, Pablo Jesús, 50410 Cuarte de Huerva (Zaragoza) (ES); Lope Moratilla, Ignacio, 50010 Zaragoza (ES); Ramos Rodríguez, Ricardo, 50300 Calatayud (Zaragoza) (ES)

(56) Entgegenhaltungen:
- CN-U- 201 718 068
- DE-U1- 9 015 040
- JP-A- 2013 161 767
- US-A- 5 239 916

## Beschreibung

Die Erfindung geht aus von einer Kochfeldvorrichtung nach dem Oberbegriff des Patentanspruchs 1.

Aus dem Stand der Technik ist bereits eine Kochfeldvorrichtung vorgeschlagen worden, die eine Heizeinheit zu einer Beheizung eines Gargeschirrs aufweist. Die Heizeinheit weist eine Vielzahl an Heizleitern auf, welche in einem Heizbetriebszustand jeweils einen Anteil des durch die Heizeinheit fließenden elektrischen Gesamtstroms führen und welche als Litzendrähte ausgebildet

JP2013161767A und CN201718068U offenbaren eine Kochfeldvorrichtung laut des Oberbegriffs vom Anspruch 1.

Die Aufgabe der Erfindung besteht insbesondere darin, eine gattungsgemäße Vorrichtung mit verbesserten Eigenschaften hinsichtlich geringer Kosten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung mit zumindest einer Heizeinheit, die zumindest einen Heizleiter aufweist, der zu einer Beheizung eines aufgestellten Gargeschirrs vorgesehen ist.

Es wird vorgeschlagen, dass der Heizleiter in zumindest einer Querschnittsebene zumindest teilweise eine wenigstens im Wesentlichen kanalförmige Gestalt aufweist. Unter einer "Kochfeldvorrichtung" soll insbesondere zumindest ein Teil, insbesondere eine Unterbaugruppe, eines Kochfelds, insbesondere eines Induktionskochfelds, verstanden werden. Insbesondere kann die Kochfeldvorrichtung auch das gesamte Kochfeld, insbesondere das gesamte Induktionskochfeld, umfassen. Vorzugsweise ist die Heizeinheit als Induktionsheizeinheit ausgebildet und dabei vorzugsweise dazu vorgesehen, ein elektromagnetisches Wechselfeld insbesondere mit einer Frequenz zwischen 20 kHz und 100 kHz bereitzustellen, das insbesondere dazu vorgesehen ist, in einem aufgestellten, insbesondere metallischen, vorzugsweise ferromagnetischen, Gargeschirrboden durch Wirbelstrominduktion und/oder Ummagnetisierungseffekte in Wärme umgewandelt zu werden. Unter einem "Heizleiter" soll insbesondere ein Element verstanden werden, welches dazu vorgesehen ist, in wenigstens einem Heizbetriebszustand elektrischen Strom, insbesondere elektrischen Wechselstrom, zu leiten und vorzugsweise zumindest einen Teil des von der Heizeinheit bereitgestellten elektromagnetischen Wechselfelds zu erzeugen, und welches insbesondere einen kleinsten stromführenden und vorteilhaft makroskopischen Teil der Heizeinheit ausbildet. Der Heizleiter ist vorzugsweise als ein einstückiges Element ausgebildet. Insbesondere ist der Heizleiter dazu vorgesehen, einen elektrischen Wechselstrom mit einer Frequenz zwischen 20 kHz und 100 kHz zu führen, insbesondere zu leiten. Der Heizleiter ist insbesondere dazu vorgesehen, eine Leistung von mindestens 500 W, insbesondere von mindestens 750 W und vorteilhaft von mindestens 1000 W zu erzeugen. Unter der Wendung, dass der Heizleiter in zumindest einer Querschnittsebene "zumindest teilweise" eine wenigstens im Wesentlichen kanalförmige Gestalt aufweist, soll insbesondere verstanden werden, dass zumindest ein Teilbereich des Heizleiters die wenigstens im Wesentlichen kanalförmige Gestalt aufweist, wobei insbesondere ein weiterer Teilbereich des Heizleiters, welcher insbesondere mit dem zumindest einen Teilbereich einstückig ausgebildet sein könnte, eine differierende und insbesondere von einer wenigstens im Wesentlichen kanalförmigen Gestalt abweichende Gestalt aufweisen könnte. Unter einer "wenigstens im Wesentlichen kanalförmigen Gestalt" des Heizleiters soll insbesondere verstanden werden, dass eine Gestalt des Heizleiters mit einem Massen- und/oder Volumenanteil von maximal 30 %, insbesondere von maximal 20 %, vorteilhaft von maximal 10 % und besonders vorteilhaft von maximal 5 % von einer kanalförmigen Gestalt abweicht. Unter einer "kanalförmigen Gestalt" des Heizleiters soll insbesondere verstanden werden, dass der Heizleiter in der Querschnittsebene, welche insbesondere senkrecht zu einer Längserstreckung des Heizleiters ausgerichtet ist, wenigstens eine und vorteilhaft genau eine Ausnehmung aufweist, insbesondere begrenzt, und diese Ausnehmung bezüglich eines Mittelpunkts und/oder Schwerpunkts des Heizleiters über einen Winkelbereich von mindestens 270°, insbesondere von mindestens 300°, vorteilhaft von mindestens 330°, besonders vorteilhaft von mindestens 350° und vorzugsweise von 360° umgibt. Der Heizleiter umschließt in der Querschnittsebene insbesondere eine Fläche, welche frei von Material des Heizleiters ist. Die Querschnittsebene ist insbesondere senkrecht zu einer Längserstreckung des Heizleiters ausgerichtet. Unter einer "Längserstreckung" des Heizleiters soll insbesondere eine Länge einer längsten Seite eines kleinsten geometrischen Quaders verstanden werden, der den Heizleiter bei einer Abwicklung des Heizleiters, bei welcher der Heizleiter eine Gerade definiert, gerade noch umschließt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können insbesondere geringe Kosten erreicht werden. Insbesondere kann eine einfache Handhabung bei einer Herstellung, insbesondere bei einer Wicklung, des Heizleiters erzielt werden, wodurch insbesondere ein preiswerter Herstellungsprozess ermöglicht werden kann. Eine elektrische Kontaktierung des Heizleiters kann insbesondere in einfacher und/oder zuverlässiger Weise durchgeführt werden. Durch eine hohe Steifigkeit des Heizleiters kann insbesondere ein Spulenträger aus einem preisgünstigen Material verwendet und/oder vorteilhaft gänzlich auf einen Spulenträger verzichtet werden, wodurch insbesondere eine hohe Betriebstemperatur ermöglicht werden kann. Insbesondere kann ein Material, aus welchem der Heizleiter ausgebildet ist, effizient genutzt werden, da insbesondere durch die wenigstens im Wesentlichen kanalförmige Gestalt einem Auftreten des Skin-Effekts vorgebeugt werden kann. Ferner kann der Kanal zur Führung eines Kühlfluids verwendet werden.

In der Querschnittsebene könnte der Heizleiter beispielsweise zumindest teilweise eine wenigstens im Wesentlichen eckige, insbesondere rechteckige und/oder quadratische und/oder dreieckige und/oder n-eckige Gestalt aufweisen. Vorteilhaft weist der Heizleiter in der Querschnittsebene jedoch zumindest teilweise eine wenigstens im Wesentlichen ovale, beispielsweise ellipsenförmige und vorzugsweise kreisringförmige Gestalt auf. Unter der Wendung, dass der Heizleiter eine "wenigstens im Wesentlichen eckige und/oder ovale und/oder kreisringförmige Gestalt" aufweist, soll insbesondere verstanden werden, dass eine Gestalt des Heizleiters mit einem Massen- und/oder Volumenanteil von maximal 30 %, insbesondere von maximal 20 %, vorteilhaft von maximal 10 % und besonders vorteilhaft von maximal 5 % von einer eckigen und/oder ovalen und/oder kreisringförmigen Gestalt abweicht. Dadurch kann insbesondere ein kostengünstiges Herstellungsverfahren des Heizleiters ermöglicht werden.

Der Heizleiter könnte über eine gesamte Längserstreckung des Heizleiters betrachtet in verschiedenen Querschnittsebenen insbesondere verschiedene Gestalten aufweisen. Hierbei könnte der Heizleiter beispielsweise in einer ersten Querschnittsebene die wenigstens im Wesentlichen kanalförmige Gestalt und in einer zweiten Querschnittsebene eine wenigstens im Wesentlichen C-förmige Gestalt aufweisen, wobei der Heizleiter insbesondere über die gesamte Längserstreckung des Heizleiters Unterbrechungen, beispielsweise in Form von Schlitzen, aufweisen könnte. Vorzugsweise ist der Heizleiter jedoch über wenigstens im Wesentlichen eine gesamte Längserstreckung als ein Rohr ausgebildet. Unter der Wendung, dass der Heizleiter über "wenigstens im Wesentlichen eine gesamte Längserstreckung" als ein Rohr ausgebildet ist, soll insbesondere verstanden werden, dass der Heizleiter über mindestens 70 %, insbesondere über mindestens 80 %, vorteilhaft über mindestens 90 % und vorzugsweise über mindestens 95 % eines Werts der Längserstreckung als ein Rohr ausgebildet ist. Unter einem "Rohr" soll insbesondere ein geometrischer Körper verstanden werden, der insbesondere eine Längserstreckung und zwei senkrecht zu der Längserstreckung ausgerichtete weitere Erstreckungen aufweist, die einen wesentlich kleineren Wert aufweisen als die Längserstreckung und die beispielsweise einen identischen oder unterschiedlichen Wert aufweisen könnten, und der insbesondere über wenigstens im Wesentlichen die gesamte Längserstreckung einen Hohlraum definiert und der insbesondere als ein Hohlzylinder mit insbesondere wenigstens im Wesentlichen kreisförmiger Grundfläche ausgebildet ist. Dadurch kann insbesondere eine stabile Ausgestaltung erzielt werden, wodurch insbesondere ein Spulenträger aus einem preisgünstigen Material verwendet und/oder vorteilhaft gänzlich auf einen Spulenträger verzichtet werden kann.

Weiterhin wird vorgeschlagen, dass der Heizleiter in der zumindest einen Querschnittsebene einen Innendurchmesser von mindestens 0,2 mm, insbesondere von mindestens 0,4 mm, vorteilhaft von mindestens 0,6 mm, besonders vorteilhaft von mindestens 0,8 mm und vorzugsweise von mindestens 1 mm aufweist. Unter einem "Innendurchmesser" des Heizleiters soll insbesondere ein Durchmesser eines größten Kreises verstanden werden, der in der zumindest einen Querschnittsebene gerade noch in die wenigstens im Wesentlichen kanalförmige Gestalt einbeschreibbar ist. Dadurch kann insbesondere in einem Vergleich zu einem massiven Heizleiter Material eingespart und/oder eine preiswerte Ausgestaltung erzielt werden. Insbesondere kann eine Kühlung des Heizleiters, beispielsweise mittels eines durch den Heizleiter geleiteten Kühlfluids, ermöglicht werden.

Ferner wird vorgeschlagen, dass der Heizleiter in der zumindest einen Querschnittsebene einen Innendurchmesser von maximal 4 mm, insbesondere von maximal 3,5 mm, vorteilhaft von maximal 3 mm, besonders vorteilhaft von maximal 2,5 mm und vorzugsweise von maximal 2 mm aufweist, wodurch insbesondere eine einfache Handhabung des Heizleiters ermöglicht werden kann.

Zudem wird vorgeschlagen, dass der Heizleiter in der zumindest einen Querschnittsebene einen Außendurchmesser von mindestens 1 mm, insbesondere von mindestens 1,2 mm, vorteilhaft von mindestens 1,4 mm, besonders vorteilhaft von mindestens 1,6 mm und vorzugsweise von mindestens 1,7 mm aufweist. Unter einem "Außendurchmesser" des Heizleiters soll insbesondere ein Durchmesser eines kleinsten Kreises verstanden werden, der in der zumindest einen Querschnittsebene gerade noch die wenigstens im Wesentlichen kanalförmige Gestalt umschließt. Dadurch kann insbesondere eine hohe Stabilität erzielt werden. Insbesondere kann ein Skin-Effekt vermieden werden.

Weiterhin wird vorgeschlagen, dass der Heizleiter in der zumindest einen Querschnittsebene einen Außendurchmesser von maximal 6 mm, insbesondere von maximal 5 mm, vorteilhaft von maximal 4 mm, besonders vorteilhaft von maximal 3,5 mm und vorzugsweise von maximal 2,8 mm aufweist, wodurch insbesondere ein preiswertes Herstellungsverfahren erreicht werden kann.

Ferner wird vorgeschlagen, dass der Heizleiter wenigstens im Wesentlichen eben ausgestaltet ist. Unter der Wendung, dass der Heizleiter "wenigstens im Wesentlichen eben" ausgestaltet ist, soll insbesondere verstanden werden, dass zwei aufeinander senkrecht ausgerichtete Seitenkanten eines kleinsten gedachten geometrischen Quaders, welcher den Heizleiter gerade noch umschließt, jeweils eine Längserstreckung mit einem Wert aufweisen, der mindestens 5 mal, insbesondere mindestens 7 mal, vorteilhaft mindestens 10 mal, besonders vorteilhaft mindestens 15 mal, vorzugsweise mindestens 20 mal und besonders bevorzugt mindestens 25 mal so groß ist wie ein Wert einer weiteren Seitenkante des Quaders, welche senkrecht zu den beiden Seitenkanten ausgerichtet ist. Insbesondere weicht ein senkrechter Abstand zwischen einem beliebigen Punkt einer ersten Oberfläche des Heizleiters und einer Kochfeldplatte sowie ein senkrechter Abstand zwischen einem beliebigen Punkt einer zweiten Oberfläche des Heizleiters und der Kochfeldplatte um maximal 20 %, insbesondere um maximal 10 %, vorteilhaft um maximal 5 % und vorzugsweise um maximal 3 % von einem Wert eines mittleren Abstands aller Punkte der jeweiligen Oberfläche des Heizleiters von der Kochfeldplatte ab, wobei der mittlere Abstand als ein Mittelwert der Abstände an jedem Punkt der entsprechenden Oberfläche des Heizleiters ausgebildet ist, wobei die erste Oberfläche in einer Einbaulage der Kochfeldplatte zugewandt und die zweite Oberfläche in einer Einbaulage der Kochfeldplatte abgewandt ist, und wobei die erste Oberfläche und die zweite Oberfläche einander gegenüberliegende Oberflächen des Heizleiters ausbilden, welche insbesondere in einer Einbaulage wenigstens im Wesentlichen parallel zu einer Haupterstreckungsebene der Kochfeldplatte ausgerichtet sind. Dadurch kann insbesondere eine platzsparende Ausgestaltung erzielt werden.

Der Heizleiter könnte beispielsweise wenigstens im Wesentlichen aus Silber und/oder aus Gold und/oder aus Aluminium ausgebildet sein. Vorzugsweise ist der Heizleiter jedoch wenigstens im Wesentlichen aus Kupfer ausgebildet. Vorzugsweise ist der Heizleiter frei von einer Isolierung. Der Heizleiter weist insbesondere eine maximale Betriebstemperatur von mindestens 150°C, insbesondere von mindestens 200°C, vorteilhaft von mindestens 250°C und vorzugsweise von mindestens 300°C auf. Die maximale Betriebstemperatur des Heizleiters ist insbesondere durch eine Schmelztemperatur von Kupfer begrenzt, welche insbesondere einen Wert von wenigstens im Wesentlichen 1085°C aufweist. Unter der Wendung, dass der Heizleiter "wenigstens im Wesentlichen aus Kupfer ausgebildet" ist, soll insbesondere verstanden werden, dass der Heizleiter zu einem Massenanteil und/oder Volumenanteil von mindestens 70 %, insbesondere über mindestens 80 %, vorteilhaft über mindestens 90 % und vorzugsweise über mindestens 95 % aus Kupfer ausgebildet ist. Dadurch kann insbesondere eine preiswerte Ausgestaltung erzielt werden. Insbesondere kann auf eine Isolierung des Heizleiters verzichtet und eine hohe Betriebstemperatur ermöglicht werden.

Ferner wird ein Verfahren zur Kühlung einer Kochfeldvorrichtung vorgeschlagen, mit zumindest einer Heizeinheit, die zumindest einen Heizleiter aufweist, der zu einer Beheizung eines aufgestellten Gargeschirrs vorgesehen ist und der in zumindest einer Querschnittsebene zumindest teilweise eine wenigstens im Wesentlichen kanalförmige Gestalt aufweist, wobei durch den Heizleiter ein Kühlfluid, das insbesondere als eine Kühlflüssigkeit ausgebildet ist und das insbesondere eine elektrische Leitfähigkeit von maximal 10⁻⁷ S/m, insbesondere von maximal 10⁻⁹ S/m, vorteilhaft von maximal 10⁻¹² S/m und vorzugsweise von maximal 10⁻¹⁵ S/m aufweist, geleitet wird. Die Kühlflüssigkeit könnte beispielsweise als destilliertes Wasser ausgebildet sein. Dadurch kann insbesondere eine Überhitzung vermieden und/oder eine hohe maximale Betriebstemperatur ermöglicht werden.

Die Induktionskochfeldvorrichtung soll hierbei nicht auf die oben beschriebene Anwendung und Ausführungsform beschränkt sein. Insbesondere kann die Induktionskochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionskochfeld mit einer Induktionskochfeldvorrichtung in einer schematischen Draufsicht,
- Fig. 2: einen Ausschnitt eines Heizleiters einer Heizeinheit der Induktionskochfeldvorrichtung in einer schematischen Darstellung,
- Fig. 3: den Heizleiter in einer schematischen Schnittdarstellung entlang der Linie III-III in Figur 2,
- Fig. 4: den Heizleiter in einem gewickelten Zustand und ein auf den Heizleiter aufgestelltes Gargeschirr in einer schematischen Darstellung,
- Fig. 5: die Heizeinheit der Induktionskochfeldvorrichtung in einer schematischen Draufsicht,
- Fig. 6: die Heizeinheit in einer schematischen Rückansicht und
- Fig. 7: die Heizeinheit, eine Kochfeldplatte der Induktionskochfeldvorrichtung und ein aufgestelltes Gargeschirr in einer schematischen Explosionsdarstellung.

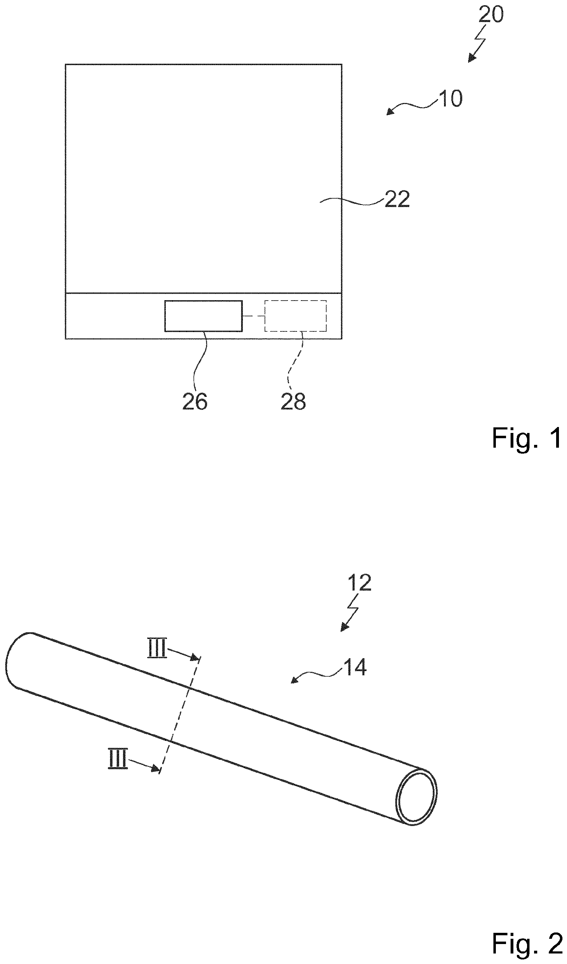

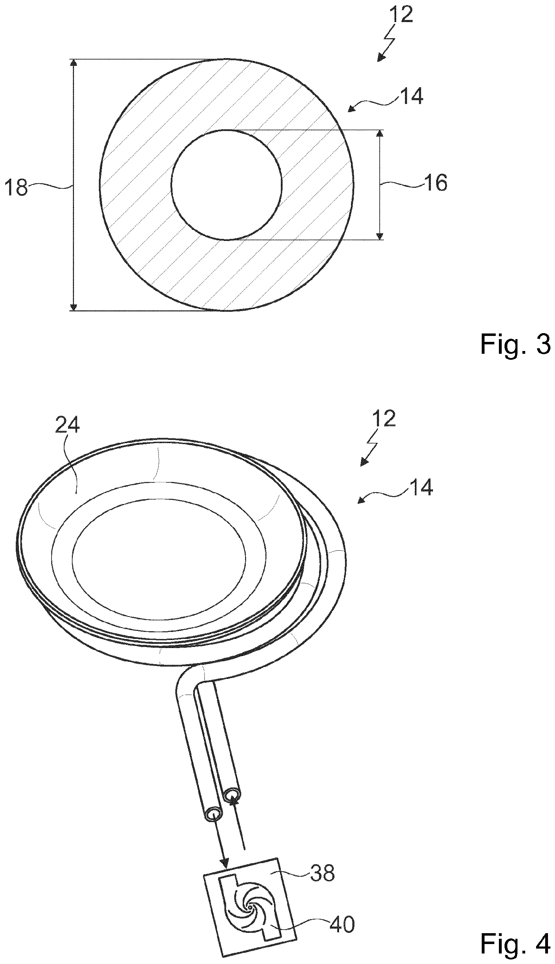

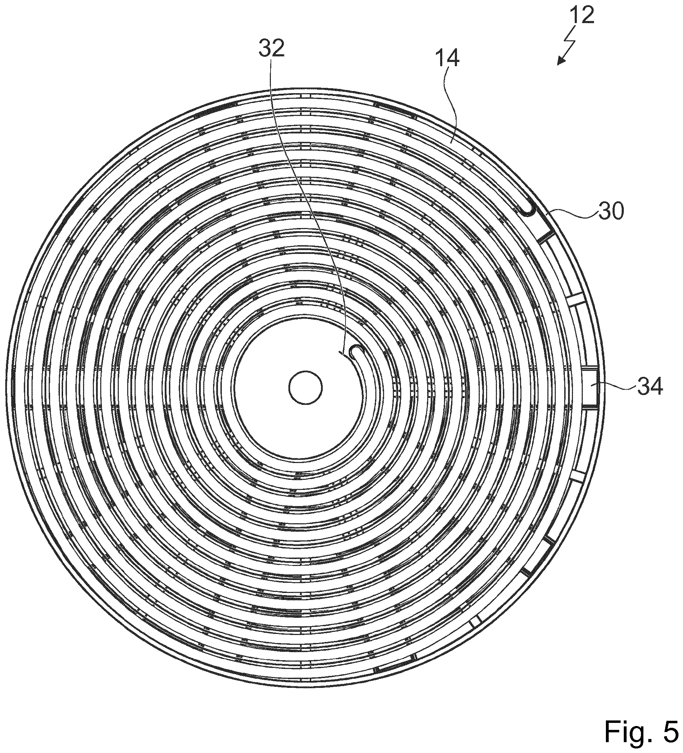

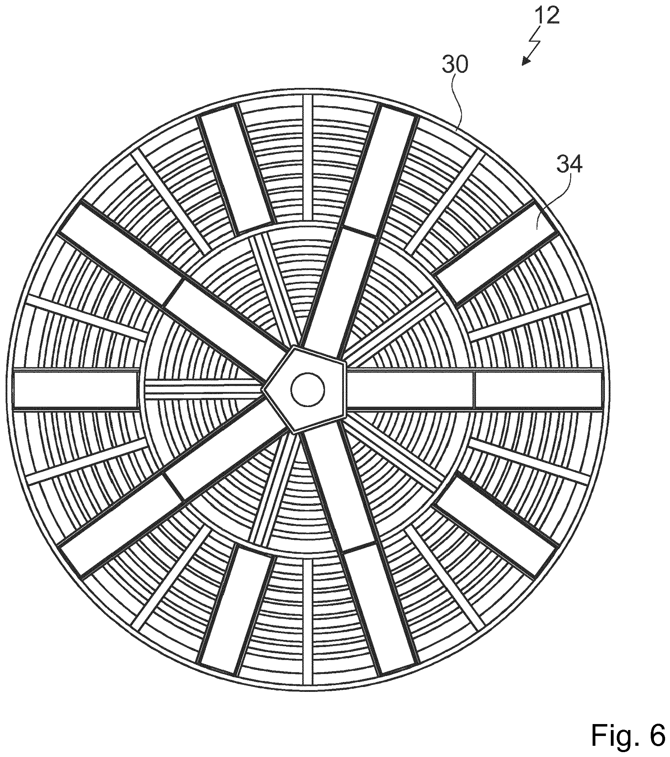

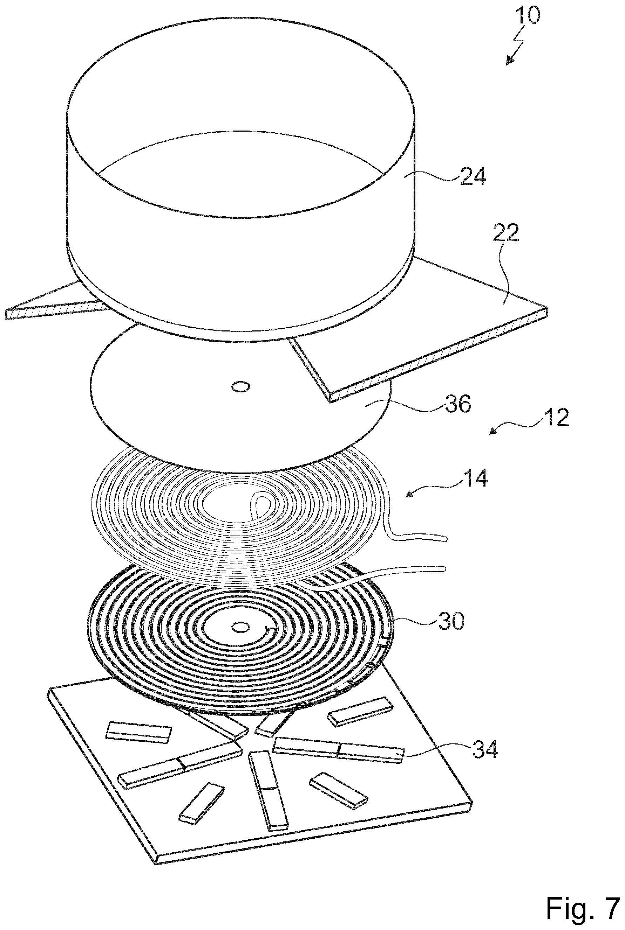

Fig. 1 zeigt ein Kochfeld 20, das als ein Induktionskochfeld ausgebildet ist, mit einer Kochfeldvorrichtung 10, die als eine Induktionskochfeldvorrichtung ausgebildet ist. Die Kochfeldvorrichtung 10 umfasst eine Kochfeldplatte 22. In einem montierten Zustand bildet die Kochfeldplatte 22 einen Teil eines Außengehäuses aus, und zwar insbesondere eines Außengehäuses des Induktionskochfelds 20. Die Kochfeldplatte 22 ist zu einem Aufstellen eines Gargeschirrs 24 vorgesehen (vgl. Fig. 4 und 7). Die Kochfeldvorrichtung 10 umfasst mehrere Heizeinheiten 12 (vgl. Fig. 5 bis 7), die jeweils dazu vorgesehen sind, auf der Kochfeldplatte 22 oberhalb der Heizeinheiten 12 aufgestelltes Gargeschirr 24 zu erhitzen. Die Heizeinheiten 12 sind in Fig. 1 der Übersichtlichkeit halber nicht dargestellt.

Die Kochfeldvorrichtung 10 umfasst eine Bedieneinheit 26 zu einer Eingabe und/oder Auswahl von Betriebsparametern (vgl. Fig. 1), beispielsweise einer Heizleistung und/oder einer Heizleistungsdichte und/oder einer Heizzone. Die Bedieneinheit 26 ist zu einer Ausgabe eines Werts eines Betriebsparameters an einen Bediener vorgesehen.

Die Kochfeldvorrichtung 10 umfasst eine Steuereinheit 28. Die Steuereinheit 28 ist dazu vorgesehen, in Abhängigkeit von mittels der Bedieneinheit 26 eingegebenen Betriebsparametern Aktionen auszuführen und/oder Einstellungen zu verändern. Die Kochfeldvorrichtung 10 umfasst eine Versorgungseinheit (nicht dargestellt), die dazu vorgesehen ist, elektrische und/oder elektronische Baueinheiten mit elektrischer Energie zu versorgen.

Die Steuereinheit 28 ordnet in einem Betriebszustand einem aufgestellten Gargeschirr 24 eine Heizzone zu. Hierzu fasst die Steuereinheit 28 von dem Gargeschirr 24 bedeckte Heizeinheiten 12 zu der Heizzone zusammen. Die Steuereinheit 28 regelt in einem Heizbetriebszustand eine Energiezufuhr zu den Heizeinheiten 12. Die Steuereinheit 28 steuert in dem Heizbetriebszustand die Versorgungseinheit an, um die Heizeinheiten 12, die sich in einem aktivierten Zustand befinden, mit elektrischem Strom zu versorgen. Von den Heizeinheiten 12 wird im Folgenden lediglich eine beschrieben.

Die Heizeinheit 12 weist genau einen einzigen Heizleiter 14 zu einer Beheizung eines aufgestellten Gargeschirrs 24 auf (vgl. Fig. 2). Der Heizleiter 14 weist in einer Querschnittsebene teilweise eine im Wesentlichen kanalförmige Gestalt auf. Die im Wesentlichen kanalförmige Gestalt des Heizleiters 14 erstreckt sich im Wesentlichen über eine gesamte Längserstreckung des Heizleiters 14. Der Heizleiter 14 definiert im Wesentlichen über die gesamte Längserstreckung des Heizleiters 14 einen Kanal. Der Heizleiter 14 weist in einer Querschnittsebene teilweise eine im Wesentlichen kreisringförmige Gestalt auf. Die im Wesentlichen kanalförmige Gestalt des Heizleiters 14 ist als im Wesentlichen kreisringförmige Gestalt ausgebildet.

Über im Wesentlichen die gesamte Längserstreckung des Heizleiters 14 ist der Heizleiter 14 als ein Rohr ausgebildet. Der Heizleiter 14 weist einen Innendurchmesser 16 auf. Der Innendurchmesser 16 weist in der Querschnittsebene eine im Wesentlichen kreisringförmige Gestalt auf (vgl. Fig. 3). In der Querschnittsebene weist der Heizleiter 14 einen Innendurchmesser 16 von im Wesentlichen 1,5 mm auf. Der Heizleiter 14 weist einen Außendurchmesser 18 auf. Der Außendurchmesser 18 weist in der Querschnittsebene eine im Wesentlichen kreisringförmige Gestalt auf. In der Querschnittsebene weist der Heizleiter 14 einen Außendurchmesser 18 von im Wesentlichen 2,3 mm auf.

Der Innendurchmesser 16 und der Außendurchmesser 18 werden anhand von zwei Kriterien ermittelt. Ein erstes Kriterium der Kriterien betrifft eine Querschnittsebene des Heizleiters 14. Die Querschnittsebene des Heizleiters 14 entspricht im Wesentlichen einer Querschnittsebene sämtlicher Litzendrähte eines Heizleiters einer vergleichbaren Heizeinheit. Ein zweites Kriterium der Kriterien betrifft eine Effizienz des Heizleiters 14. Der Innendurchmesser 16 und der Außendurchmesser 18 sind gemeinsam dazu vorgesehen, eine hohe Effizienz des Heizleiters 14 und/oder eine geringe Verlustleistung des Heizleiters 14 sicherzustellen. Hierzu werden der Innendurchmesser 16 und der Außendurchmesser 18 mittels einer Finite Elemente Berechnung ermittelt, bei welcher insbesondere eine Leistung und/oder eine Betriebsfrequenz und/oder Eigenschaften von aufgestelltem Gargeschirr berücksichtigt werden.

In einem gewickelten Zustand ist der Heizleiter 14 in Form einer Spirale gewickelt (vgl. Fig. 4). Benachbarte Windungen des Heizleiters 14 sind in dem gewickelten Zustand zueinander beabstandet angeordnet. Der Heizleiter 14 ist in dem gewickelten Zustand im Wesentlichen eben ausgestaltet. In einer Einbaulage ist der Heizleiter 14 unterhalb der Kochfeldplatte 22 angeordnet. Der Heizleiter 14 weist in dem gewickelten Zustand eine Haupterstreckungsebene auf. Die Haupterstreckungsebene des Heizleiters 14 ist in der Einbaulage im Wesentlichen parallel zu einer Haupterstreckungsebene der Kochfeldplatte 22 ausgerichtet.

Eine Haupterstreckungsebene einer Baueinheit ist parallel zu einer größten Seitenfläche eines kleinsten geometrischen Quaders, welcher die Baueinheit gerade noch vollständig umschließt. Die Haupterstreckungsebene der Baueinheit verläuft durch den Mittelpunkt des Quaders.

Ein Großteil einer der Kochfeldplatte 22 in der Einbaulage und in dem gewickelten Zustand zugewandten Oberfläche des Heizleiters 14 definiert eine erste Ebene. Die erste Ebene ist in der Einbaulage im Wesentlichen parallel zu der Haupterstreckungsebene der Kochfeldplatte 22 ausgerichtet. Ein Großteil einer der Kochfeldplatte 22 in der Einbaulage und in dem gewickelten Zustand abgewandten Oberfläche des Heizleiters 14 definiert eine zweite Ebene. Die zweite Ebene ist in der Einbaulage im Wesentlichen parallel zu der Haupterstreckungsebene der Kochfeldplatte 22 ausgerichtet. In der Einbaulage ist die Haupterstreckungsebene der Kochfeldplatte 22 im Wesentlichen senkrecht zu einer Schwerkraftrichtung ausgerichtet.

In dem gewickelten Zustand weist der Heizleiter 14 eine Anzahl von mindestens 10, insbesondere von mindestens 12 und vorteilhaft von mindestens 14 Windungen auf. Der Heizleiter 14 weist in dem gewickelten Zustand eine Anzahl von maximal 40, insbesondere von maximal 30 und vorteilhaft von maximal 25 Windungen auf. Im vorliegenden Ausführungsbeispiel weist der Heizleiter 14 eine Anzahl von im Wesentlichen 13 Windungen auf.

Der Heizleiter 14 ist im Wesentlichen aus Kupfer ausgebildet. Hierbei könnte der Heizleiter beispielsweise aus einer Legierung aus Kupfer mit wenigstens einem weiteren Material ausgebildet sein. Im vorliegenden Ausführungsbeispiel ist der Heizleiter 14 aus reinem Kupfer ausgebildet. Der Heizleiter 14 ist frei von einer Isolierung ausgebildet. Ein Abstand zwischen zueinander benachbart angeordneten Windungen des Heizleiters 14 beträgt mindestens 0,1 mm, insbesondere mindestens 0,3 mm, vorteilhaft mindestens 0,5 mm, besonders vorteilhaft mindestens 0,7 mm, vorzugsweise mindestens 1 mm und besonders bevorzugt mindestens 1,5 mm. Der Abstand zwischen benachbarten Windungen ist als ein Abstand von einander zugewandten, nächstgelegenen Oberflächen der zueinander benachbart angeordneten Windungen des Heizleiters 14 ausgebildet. In dem gewickelten Zustand definiert der Abstand eine Erstreckung eines Freiraums zwischen zueinander benachbart angeordneten Windungen. Der Abstand ist im Wesentlichen parallel zu der Haupterstreckungsebene des Heizleiters 14 ausgerichtet. Der Abstand ist im Wesentlichen senkrecht zu wenigstens einer der Oberfläche einer der zueinander benachbart angeordneten Windungen des Heizleiters 14 ausgerichtet.

Beispielsweise könnte auf einen Spulenträger, der insbesondere zumindest einen Anordnungsabschnitt für den Heizleiter aufweisen könnte, verzichtet werden (vgl. Fig. 4). Hierbei könnte die Heizeinheit eine Platte aufweisen, auf der der Heizleiter in dem montierten Zustand angeordnet sein könnte. Die Platte könnte aus einem Material ausgebildet sein, das insbesondere elektrischen Strom nicht leitet und das insbesondere eine Schmelztemperatur von mindestens 250°C, insbesondere von mindestens 300°C, vorteilhaft von mindestens 350°C und vorteilhaft von mindestens 400°C aufweist. Beispielsweise könnte die Platte aus Mica ausgebildet sein.

Im vorliegenden Ausführungsbeispiel weist die Heizeinheit 12 einen Spulenträger 30 auf (vgl. Fig. 5 bis 7). In einem montierten Zustand ist der Heizleiter 14 auf dem Spulenträger 30 angeordnet. Der Spulenträger 30 weist zumindest einen Anordnungsabschnitt 32 auf. Der Anordnungsabschnitt 32 definiert eine Position des Heizleiters 14 auf dem Spulenträger 30. Der Spulenträger 30 ist aus elektrisch isolierendem Material ausgebildet. In der Einbaulage ist der Spulenträger 30 dazu vorgesehen, eine Isolierung zwischen dem Heizleiter 14 und zumindest einer weiteren Baueinheit insbesondere der Kochfeldvorrichtung 10 auszubilden.

Beispielsweise könnte der Anordnungsabschnitt abschnittsweise ausgebildet sein, wobei der Anordnungsabschnitt insbesondere mehrere Teilabschnitte aufweisen könnte, die insbesondere gemeinsam die Position des Heizleiters auf dem Spulenträger definieren könnten. Hierbei könnte der Anordnungsabschnitt in dem montierten Zustand wenigstens teilweise in einem Freiraum zwischen benachbarten Windungen des Heizleiters angeordnet sein. Im vorliegenden Ausführungsbeispiel ist der Anordnungsabschnitt 32 durchgängig ausgebildet. Der Anordnungsabschnitt 32 ist im Wesentlichen spiralförmig ausgebildet. In dem montierten Zustand ist der Anordnungsabschnitt 32 zu einem Großteil in einem Freiraum zwischen benachbarten Windungen des Heizleiters 14 angeordnet.

Die Heizeinheit 12 weist zumindest ein Ferritelement 34 auf (vgl. Fig. 5 bis 7). Im vorliegenden Ausführungsbeispiel weist die Heizeinheit 12 fünfzehn Ferritelemente 34 auf. Im Folgenden wird lediglich eines der Ferritelemente 34 beschrieben. Das Ferritelement 34 ist in dem montierten Zustand an dem Spulenträger 30 angeordnet. In dem montierten Zustand ist das Ferritelement 34 an dem Spulenträger 30 befestigt. Der Spulenträger 30 weist zumindest einen Befestigungsabschnitt auf, der zu einer Befestigung des Ferritelements 34 an dem Spulenträger 30 vorgesehen ist.

Die Heizeinheit 12 weist zumindest ein Isolationselement 36 auf (vgl. Fig. 7). Das Isolationselement 36 ist als eine Platte ausgebildet. In der Einbaulage ist das Isolationselement 36 zwischen dem Heizleiter 14 und der Kochfeldplatte 22 angeordnet. Das Isolationselement 36 ist aus einem elektrisch isolierenden Material ausgebildet. Beispielsweise könnte das Isolationselement 36 aus Mica ausgebildet sein.

Die Kochfeldvorrichtung 10 umfasst eine Kühlungseinheit 38 (vgl. Fig. 4). Die Kühlungseinheit 38 ist dazu vorgesehen, den Heizleiter 14 in einem Heizbetriebszustand zu kühlen. Die Kühlungseinheit 38 weist zumindest einen Fluidbehälter (nicht dargestellt) zu einer Lagerung eines Kühlfluids auf. Beispielsweise könnte die Kühlungseinheit einen ersten Fluidbehälter zu einer Lagerung von frischem Kühlfluid und einen zweiten Fluidbehälter zu einer Lagerung von gebrauchtem Kühlfluid aufweisen. Die Kühlungseinheit 38 weist zumindest ein Beförderungselement 40 auf. Das Beförderungselement 40 ist dazu vorgesehen, Kühlfluid aus dem Fluidbehälter, insbesondere aus dem ersten Fluidbehälter, durch den von dem Heizleiter 14 definierten Kanal zu befördern. Beispielsweise könnte das Beförderungselement 40 als eine Pumpe ausgebildet sein. In einem Verfahren zur Kühlung der Kochfeldvorrichtung 10 wird durch den Heizleiter 14 ein Kühlfluid geleitet.

Das Kühlfluid ist für elektrischen Strom nichtleitend ausgebildet. Das Kühlfluid ist als eine Flüssigkeit ausgebildet. Im vorliegenden Ausführungsbeispiel ist das Kühlfluid als destilliertes Wasser ausgebildet. Die Kühlungseinheit könnte beispielsweise ein Thermoelement zu einer Kühlung des Kühlfluids aufweisen. Das Thermoelement ist dazu vorgesehen, frisches Kühlfluid zu kühlen. Hierbei könnte das Thermoelement beispielsweise dazu vorgesehen sein, den Fluidbehälter zu kühlen, in welchem sich das Kühlfluid vor einer Beförderung des Kühlfluids durch den von dem Heizleiter definierten Kanal befinden könnte. Zusätzlich ist das Beförderungselement 40 dazu vorgesehen, gebrauchtes Kühlfluid zu kühlen.

### Bezugszeichen

- 10: Induktionskochfeldvorrichtung
- 12: Heizeinheit
- 14: Heizleiter
- 16: Innendurchmesser
- 18: Außendurchmesser
- 20: Induktionskochfeld
- 22: Kochfeldplatte
- 24: Gargeschirr
- 26: Bedieneinheit
- 28: Steuereinheit
- 30: Spulenträger
- 32: Anordnungsabschnitt
- 34: Ferritelement
- 36: Isolationselement
- 38: Kühlungseinheit
- 40: Beförderungselement

## Patentansprüche

1. Kochfeldvorrichtung, insbesondere Induktionskochfeldvorrichtung, mit zumindest einer Heizeinheit (12), die zumindest einen Heizleiter (14) aufweist, der zu einer Beheizung eines aufgestellten Gargeschirrs (24) vorgesehen ist, wobei der Heizleiter (14) in zumindest einer Querschnittsebene zumindest teilweise eine wenigstens im Wesentlichen kanalförmige Gestalt aufweist, **dadurch gekennzeichnet, dass** der Heizleiter (14) in der zumindest einen Querschnittsebene einen Innendurchmesser (16) von maximal 4 mm aufweist, wobei der Heizleiter (14) in der zumindest einen Querschnittsebene einen Innendurchmesser (16) von mindestens 0,2 mm aufweist, wobei der Heizleiter (14) in der zumindest einen Querschnittsebene einen Außendurchmesser (18) von maximal 6 mm aufweist und wobei der Heizleiter (14) in der zumindest einen Querschnittsebene einen Außendurchmesser (18) von mindestens 1 mm aufweist.

2. Kochfeldvorrichtung nach Anspruch 1, **dadurch gekennzeichnet, dass** der Heizleiter (14) in der zumindest einen Querschnittsebene zumindest teilweise eine wenigstens im Wesentlichen kreisringförmige Gestalt aufweist.

3. Kochfeldvorrichtung nach Anspruch 1 oder 2, **dadurch gekennzeichnet, dass** der Heizleiter (14) über wenigstens im Wesentlichen eine gesamte Längserstreckung als ein Rohr ausgebildet ist.

4. Kochfeldvorrichtung nach einem der vorhergehenden Ansprüche, **dadurch gekennzeichnet, dass** der Heizleiter (14) wenigstens im Wesentlichen eben ausgestaltet ist.

5. Kochfeldvorrichtung nach einem der vorhergehenden Ansprüche, **dadurch gekennzeichnet, dass** der Heizleiter (14) wenigstens im Wesentlichen aus Kupfer ausgebildet ist.

6. Kochfeld, insbesondere Induktionskochfeld, mit einer Kochfeldvorrichtung (10) nach einem der vorhergehenden Ansprüche.

## Claims

1. Hotplate device, in particular induction hotplate device, having at least one heating unit (12), which has at least one heating element (14) which is provided for heating a cooking utensil (24) placed thereon, wherein the heating element (14) at least partially has an at least substantially canal-like shape in at least one cross-sectional plane, **characterised in that** the heating element (14) has a maximum internal diameter (16) of 4 mm in the at least one cross-sectional plane, wherein the heating element (14) has a minimum internal diameter (16) of 0.2 mm in the at least one cross-sectional plane, wherein the heating element (14) has a maximum external diameter (18) of 6 mm in the at least one cross-sectional plane and wherein the heating element (14) has a minimum external diameter (18) of at least 1 mm in the at least one cross-sectional plane.

2. Hotplate device according to claim 1, **characterised in that** the heating element (14) at least partially has an at least substantially circular shape in the at least one cross-sectional plane.

3. Hotplate device according to claim 1 or 2, **characterised in that** the heating element (14) is designed as a tube over at least substantially an entire longitudinal extent.

4. Hotplate device according to one of the preceding claims, **characterised in that** the heating element (14) is configured as at least substantially flat.

5. Hotplate device according to one of the preceding claims, **characterised in that** the heating element (14) is embodied at least substantially of copper.

6. Hotplate, in particular induction hotplate, having a hotplate device (10) according to one of the preceding claims.

## Revendications

1. Dispositif de champ de cuisson, en particulier dispositif de champ de cuisson à induction, avec au moins une unité de chauffe (12) qui présente au moins un conducteur chauffant (14) prévu afin de chauffer un élément de batterie de cuisine (24) posé, dans lequel le conducteur chauffant (14) présente dans au moins un plan de section transversale au moins partiellement une forme au moins essentiellement de conduit, **caractérisé en ce que** le conducteur chauffant (14) présente dans l'au moins un plan de section transversale un diamètre intérieur (16) maximal de 4 mm, dans lequel le conducteur chauffant (14) présente dans l'au moins un plan de section transversale un diamètre intérieur (16) d'au moins 0,2 mm, dans lequel le conducteur chauffant (14) présente dans l'au moins un plan de section transversale un diamètre extérieur (18) maximal de 6 mm et dans lequel le conducteur chauffant (14) présente dans l'au moins un plan de section transversale un diamètre extérieur (18) d'au moins 1 mm.

2. Dispositif de champ de cuisson selon la revendication 1, **caractérisé en ce que** le conducteur chauffant (14) présente dans l'au moins un plan de section transversale au moins partiellement une forme au moins essentiellement d'anneau de cercle.

3. Dispositif de champ de cuisson selon la revendication 1 ou 2, **caractérisé en ce que** le conducteur chauffant (14) est exécuté sous forme de tuyau sur essentiellement au moins une étendue longitudinale complète.

4. Dispositif de champ de cuisson selon l'une des revendications précédentes, **caractérisé en ce que** le conducteur chauffant (14) est exécuté au moins essentiellement de façon plane.

5. Dispositif de champ de cuisson selon l'une des revendications précédentes, **caractérisé en ce que** le conducteur chauffant (14) est exécuté au moins essentiellement en cuivre.

6. Champ de cuisson, en particulier champ de cuisson à induction, avec un dispositif de champ de cuisson (10) selon l'une des revendications précédentes.
